# EUROPEAN PATENT APPLICATION

(11) **EP 4 241 984 A1**
(43) Date of publication of application: **13.09.2023**
(21) Application number: 21889260.2
(22) Date of filing: 05.11.2021
(51) Int. Cl.: B32B 23/08, B32B 27/22, B32B 27/36, B65D 65/40, C08J 3/02, C08L 29/04, C08L 67/04, C08L 91/06, C08L 101/16, C08J 7/052

(54) **AQUEOUS DISPERSION, COATING LIQUID CONTAINING THIS AQUEOUS DISPERSION, METHOD FOR PRODUCING POLYLACTIC ACID FILM USING THIS COATING LIQUID, AND SHEET MATERIAL**

(30) Priority: 06.11.2020 JP 2020185469
(71) Applicant: Chukyo Yushi Co., Ltd., Ama-shi, Aichi 490-1212 (JP)
(72) Inventor: HIRAMATSU Hiroshi, Ama-shi, Aichi 490-1212 (JP); KATOU Yuuki, Ama-shi, Aichi 490-1212 (JP); SATOU Seiji, Ama-shi, Aichi 490-1212 (JP); ABE Yoshiyuki, Ama-shi, Aichi 490-1212 (JP); KAWAMURA Shougo, Ama-shi, Aichi 490-1212 (JP)
(74) Representative: Winter, Brandl - Partnerschaft mbB
(86) International application number: PCT/JP2021/040705
(87) International publication number: WO 2022/097708

(57) **Abstract**

The present invention relates to improvement of blocking resistance when a water-based dispersion containing polylactic acid as a dispersoid is used as a heat sealant. Provided is an aqueous dispersion obtained by dispersing a dispersoid containing polylactic acid and carnauba wax in a water-based dispersion medium, in which 1 to 14% by mass of the carnauba wax is blended relative to a mass of the polylactic acid.

## Description

### TECHNICAL FIELD

The present invention relates to improvement of a water-based dispersion containing polylactic acid as a dispersoid.

The present invention relates to a heat sealant that is coated on a film, paper, or the like and has blocking resistance.

### BACKGROUND ART

Food packaging is required to have excellent heat sealability for processing into bags and containers. Although such a function is satisfied by laminating a plastic film on a substrate of a packaging material, it has been proposed to replace the plastic of the substrate of the packaging material with paper due to recent environmental pollution problems caused by plastic. However, when paper is processed into a bag or a container, a large amount of polyethylene or polypropylene is laminated as a heat sealant on a paper substrate and used. A lamination amount of these plastics varies depending on a product concept, is approximately 20 to 50 g/m², and may be as large as 300 g/m². Therefore, even in a packaging container in which plastic is replaced with paper as the substrate, there is still a problem that an amount of plastic used is not sufficiently reduced, and a means for directly reducing a use of plastic is required.

Thus, studies have been made to form a heat seal layer on a paper substrate by coating the substrate with an aqueous dispersion of a biodegradable resin and drying the dispersion. When polylactic acid is selected as the biodegradable resin, it is necessary to use polylactic acid having a glass transition point of 40 to 60°C in order to exhibit heat sealability. In general, after a heat seal layer is formed on the paper substrate, the heat seal layer is wound into a roll, and the rolled layer is stored as a product. However, in case that the temperature reaches 40 to 50°C during transportation of products or in the summer season when a storage temperature in a warehouse is high, so-called blocking occurs in which the heat seal layer and the paper substrate (back surface of the heat seal layer) overlapping the heat seal layer are heat-sealed (adhered).

In food packaging applications, the heat seal layers come into contact with each other due to formation into a bag shape. Thus, since blocking between the heat seal layers may occur even in processing into a packaging container or using as a container, measures against the blocking have been required.

As a method of preventing the blocking between the heat seal layer and the paper substrate in a rolled state as described above, it is known to add a wax to the heat seal layer (Patent Document 1). Patent Document 1 discloses an aqueous heat sealant containing a wax and a polyolefin resin and having blocking resistance, and discloses that blocking is improved by addition of a specific wax and that both heat sealability and blocking resistance can be achieved.

### CITATIONS LIST

### PATENT DOCUMENTS

Patent Document 1: Japanese Patent No. 4615927

### SUMMARY OF INVENTION

### TECHNICAL PROBLEMS

In order to solve the above-mentioned problems, the present inventors intend to provide a polylactic acid aqueous dispersion having good blocking resistance as well as excellent heat sealability.

### SOLUTIONS TO PROBLEMS

As a result of intensive studies, the present inventors have found that by blending carnauba wax as an antiblocking agent suitable for polylactic acid at a specific ratio, it is possible to achieve both blocking resistance and heat sealability that are mutually contradictory, and have reached the present invention.

That is, a first aspect of the present invention is defined as follows.

An aqueous dispersion comprising a biodegradable resin and a wax as dispersoids which are dispersed in a water-based dispersion medium,
wherein the biodegradable resin comprises polylactic acid,
the wax comprises carnauba wax, and
1 to 14% by mass of the carnauba wax is blended relative to a mass of the polylactic acid.

When a film is formed on a substrate using the aqueous dispersion of the first aspect defined as described above, excellent blocking resistance is exhibited while securing heat sealability.

Here, when an amount of the carnauba wax relative to a mass of the polylactic acid is less than 1% by mass, the blocking resistance is insufficient. On the other hand, when the amount is more than 14% by mass, the heat sealability is deteriorated.

The whole of the polylactic acid and the carnauba wax may be physically separated as a dispersoid, or the polylactic acid and the carnauba wax may be wholly or partially linked to each other.

A more preferable the amount of the carnauba wax relative to a mass of the polylactic acid is 2 to 14% by mass (second aspect). A sheet obtained from the aqueous dispersion at this blending ratio can exhibit high water resistance.

A still more preferable the amount of the carnauba wax is 6 to 14% by mass (third aspect).

By adopting the amount in such a range, blocking resistance exceeding 50°C can be obtained while securing practical heat sealability.

A fourth aspect of the present invention is defined as follows. That is, in the specific aqueous dispersion according to any one of the first to third aspects, further comprising a partially hydrolyzed polyvinyl alcohol as a dispersant in the aqueous dispersion medium in an amount of 2.0 to 10.0% by mass relative to a mass of the dispersoid.

When the partially hydrolyzed polyvinyl alcohol blended as described above is employed as the dispersant, simultaneous achievement of the heat sealability and the blocking resistance can be confirmed.

A fifth aspect of the present invention is defined as follows.

An aqueous dispersion comprising a biodegradable resin, a plasticizer, and a wax as dispersoids which are dispersed in a water-based dispersion medium,
wherein the biodegradable resin comprises polylactic acid,
the plasticizer is contained in an amount of 1 to 15% by mass relative to a mass of the polylactic acid,
the wax comprises carnauba wax, and
1 to 14% by mass of the carnauba wax is blended relative to a total mass of the polylactic acid and the plasticizer.

According to the aqueous dispersion defined in the fifth aspect defined as above, similarly to the aqueous dispersion of the first aspect, when a film is formed using the aqueous dispersion, excellent blocking resistance is exhibited while securing heat sealability.

The biodegradable resin, the plasticizer, and the wax as the dispersoid may be separated from each other or may be wholly or partially linked.

Here, when a amount of the carnauba wax relative to a mass of the polylactic acid and the plasticizer is less than 1% by mass, the blocking resistance is insufficient. On the other hand, when the amount is more than 14% by mass, the heat sealability is deteriorated.

By setting an amount of the plasticizer relative to a mass of polylactic acid within the range of 1 to 15% by mass, flexibility can be imparted to the heat seal layer obtained from the aqueous dispersion. When the amount of the plasticizer is less than 1% by mass, sufficient flexibility cannot be imparted. On the other hand, if the amount of the plasticizer is more than 15% by mass, this is not preferable since the heat sealability is deteriorated.

A more preferable the amount of the carnauba wax relative to a mass of the polylactic acid is 2 to 14% by mass (sixth aspect). A sheet obtained from the aqueous dispersion at this blending ratio can exhibit high water resistance.

A still more preferable the amount of the carnauba wax is 6 to 14% by mass (seventh aspect).

By adopting the amount in such a range, blocking resistance exceeding 50°C can be obtained while securing practical heat sealability.

An eighth aspect of the present invention is defined as follows. That is, in the specific aqueous dispersion according to any one of the fifth to seventh aspects, further comprising a partially hydrolyzed polyvinyl alcohol as a dispersant in the aqueous dispersion medium in an amount of 2.0 to 10.0% by mass relative to a mass of the dispersoid.

When the partially hydrolyzed polyvinyl alcohol blended as described above is employed as the dispersant, simultaneous achievement of the heat sealability and the blocking resistance can be confirmed.

The aqueous dispersion defined in the first to eighth aspects can be used as a coating liquid for forming a polylactic acid film on a substrate (ninth aspect).

By applying such a coating liquid to the substrate and drying the coating liquid, a polylactic acid film can be formed on a surface of the substrate (tenth aspect).

By adopting a sheet (paper or the like) formed of a cellulose material as the substrate, a sheet material suitable for food packaging or the like can be obtained (eleventh aspect). Both polylactic acid and carnauba wax as well as a substrate formed from a cellulose material have biodegradability, and a compostable food packaging material can be provided.

A polylactic acid film laminated on a sheet material using the aqueous dispersion defined in the first to fourth aspects contains polylactic acid and carnauba wax, and a blending ratio of the carnauba wax to a mass of the polylactic acid is 1 to 14% by mass (eleventh aspect).

According to the sheet material blended thus, the same action as in the first aspect can be obtained.

The blending ratio of the carnauba wax to the polylactic acid and in the sheet material is more preferably 2 to 14% by mass. By adopting such blending, a Cobb water absorptiveness becomes 3.0 g/m² or less, and the water resistance becomes excellent (twelfth aspect).

The blending ratio of the carnauba wax to the polylactic acid and in the sheet material can be 6 to 14% by mass (fourteenth aspect).

By adopting such blending, high blocking resistance (50°C or higher) can be secured while maintaining practical heat sealability (fifteenth aspect).

A polylactic acid film laminated on a sheet material using the aqueous dispersion defined in the fifth to eighth aspects comprises polylactic acid, a plasticizer, and carnauba wax, and a blending ratio of the carnauba wax to the polylactic acid and the plasticizer is 1 to 14% by mass (sixteenth aspect).

According to the sheet material blended thus, the same action as in eleventh aspect can be obtained.

The blending ratio of the carnauba wax to the polylactic acid and the plasticizer in the sheet material is more preferably 2 to 14% by mass (seventeenth aspect). By adopting such blending, the Cobb water absorptiveness becomes 3.0 g/m² or less, and the water resistance becomes excellent (eighteenth aspect).

The blending ratio of the carnauba wax to the polylactic acid and the plasticizer in the sheet material can be 6 to 14% by mass (nineteenth aspect).

By adopting such blending, high blocking resistance (50°C or higher) can be secured while maintaining practical heat sealability (twentieth aspect).

The coating liquid defined in the ninth aspect can also be used as a coating agent for functional particles. Examples of the functional particles include agrochemicals and fertilizers. By covering such functional particles with a coating agent formed from polylactic acid, a biodegradable film having water resistance can be formed on a surface of the functional particles. Since a hydrolysis rate of polylactic acid can be controlled by adjusting the amount of carnauba wax relative to a mass of the polylactic acid, a controlled release rate of a component of the functional particle can be adjusted.

Therefore, a twenty-first aspect of the present invention is defined as follows.

A process for producing sustained release functional particles, comprising the steps of:
providing the aqueous dispersion according to any one of first to eighth aspect
forming a film layer of the aqueous dispersion on a surface of a fertilizer, an agrochemical, or other functional particle; and
removing water from the aqueous dispersion.

### DESCRIPTION OF EMBODIMENT

The reason why polylactic acid has been selected as a main component of a heat seal is that the polylactic acid has been industrially put to practical use, and is inexpensive and preferable for food packaging as compared with other biodegradable resins. When a biodegradable resin film layer stacked on a paper substrate is applied as a heat seal layer, a blending ratio of L-type and D-type polylactic acids is preferably 6: 94 to 94: 6. In this range, excellent heat sealability can be obtained. On the other hand, when the blending ratio is out of this range, crystallinity and the melting point increase, so that it may be difficult to exhibit the heat sealability at a low temperature.

A polylactic acid film layer has excellent water resistance and oil resistance, and can be utilized as water-resistant paper and oil-resistant paper by being stacked on the paper substrate.

The carnauba wax is derived from a natural product obtained by purifying carnauba wax collected from a palm tree of the palm family, and is generally composed of 80 to 85% by mass of a wax ester composed of a higher fatty acid and a higher alcohol, 3 to 4% by mass of a free fatty acid, 10 to 12% by mass of a free alcohol, and 1 to 3% by mass of a hydrocarbon. In this specification, a composite having the above composition is also included in the carnauba wax. The carnauba wax derived from palm trees is also suitable in that food safety is well known, for example, it is also used as a food additive.

An amount of the carnauba wax is preferably 1 to 14% by mass, more preferably 2 to 14% by mass, and most preferably 6 to 14% by mass with respect to a mass of the polylactic acid or a total mass of the polylactic acid and the plasticizer. When the amount is less than 1% by mass, the blocking resistance is insufficient, and when the amount is more than 14% by mass, the heat sealability is not exhibited.

The plasticizer is an auxiliary agent that softens polylactic acid and a biodegradable resin, and can impart flexibility to a heat seal layer obtained from the polylactic acid.

Examples of the plasticizer include the following.

Examples thereof include citric acid derivatives such as triethyl citrate, tributyl citrate, triethyl acetyl citrate, and tributyl acetyl citrate; ether ester derivatives such as diethylene glycol diacetate, triethylene glycol diacetate, and triethylene glycol dipropionate; glycerin derivatives such as glycerin triacetate, glycerin tripropionate, and glycerin tributyrate; phthalic acid derivatives such as ethyl phthalyl ethyl glycolate, ethyl phthalyl butyl glycolate, and butyl phthalyl butyl glycolate; reaction products of adipic acid 2-(2-methoxyethoxy)ethanol and benzyl alcohol, adipic acid derivatives such as a condensate of adipic acid and 1,4-butanediol; and polyhydroxycarboxylic acids such as alkyl sulfonic acid phenyl ester, polycaprolactone, and polypropiolactone, and one or two or more thereof can be used in combination.

The amount of the plasticizer is appropriately selected according to the use of the water-based dispersion and the like, and for example, is preferably 1 to 15% by mass, more preferably 1 to 10% by mass, and most preferably 1 to 5% by mass relative to a mass of the dispersoid. When the amount is less than 1% by mass, heat sealing performance is poor, and when the amount is more than 15% by mass, heat sealing strength is weak, so that it is not practical.

In the dispersoid, in addition to the polylactic acid and the plasticizer, a biodegradable resin other than the polylactic acid can be blended as an auxiliary agent added for modifying the dispersoid.

In the above, the biodegradable resin is a material that is completely consumed by microorganisms and produces only natural by-products.

Examples of the biodegradable resin include the following.

Examples thereof include polylactic acids such as copolymers of lactic acid and other hydroxycarboxylic acids; polycaprolactones such as polycaprolactone and copolymers of caprolactone and hydroxycarboxylic acid; polybutylene succinate, polybutylene succinate adipate, thermoplastic starch, polymalate, polybutylene adipate terephthalate, polyethylene terephthalate succinate, polybutylene terephthalate succinate, polyhydroxyalkanoic acid, polyhydroxybutyrate, polyhydroxyvalerate, polyhydroxyhexanoate, and polyethylene furanoate. These biodegradable resins can be used alone or in combination of two or more thereof.

The amount of the biodegradable resin is appropriately selected according to the use of the water-based dispersion and the like, and can be, for example, 1.0 to 50.0% by mass with respect to polylactic acid.

In the dispersoid, in addition to the polylactic acid and the plasticizer, a carbodiimide compound can be blended as an auxiliary agent for improving temporal stability of the aqueous dispersion.

As the carbodiimide compound, a polyvalent carbodiimide compound is desirably used. More preferable examples thereof include carbodiimide-modified isocyanate compounds and derivatives obtained by reacting an isocyanate group of a carbodiimide-modified isocyanate compound with an amino group such as cyclohexylamine.

The carbodiimide-modified isocyanate is obtained by carbodiimidizing a part of an isocyanate compound, and as the carbodiimide-modified isocyanate compound, a polymer obtained by carbodiimidizing the following isocyanate can be used.

Examples of the carbodiimide-modified isocyanate include the following.

Examples thereof include phenylene diisocyanate, 4,4'-diphenylmethane diisocyanate, dimethylbiphenylene diisocyanate, dimethoxybiphenylene diisocyanate, tetrahydronaphthalene diisocyanate, tolylene diisocyanate, tetramethylene diisocyanate, hexamethylene diisocyanate, dodecamethylene diisocyanate, trimethylhexamethylene diisocyanate, cyclohexylene diisocyanate, polymethylene polyphenyl polyisocyanate, xylylene diisocyanate, hydrogenated xylylene diisocyanate, lysine diisocyanate, isophorone diisocyanate, dicyclohexylmethane diisocyanate, and 4,4'-dimethyldicyclohexylmethane diisocyanate.

Polyvalent carbodiimide compounds can be used alone or in combination of two or more thereof. The amount of the polyvalent carbodiimide compound in the dispersoid is appropriately selected according to the use of the water-based dispersion and the like, and is, for example, preferably 0.6 to 5.5% by mass and most preferably 0.6 to 2.6% by mass relative to a mass of the polylactic acid. When a blending ratio of the carbodiimide compound in the dispersoid is less than 0.6% by mass relative to the polylactic acid in terms of a mass ratio, temporal stability with respect to polylactic acid may not be sufficiently exhibited. On the other hand, even when the blending ratio is more than 5.5% by mass, an effect commensurate with the amount of use cannot be obtained, which is not economical and not preferable.

Examples of the auxiliary agent include the following.

Examples of a pH adjusting agent include, but are not particularly limited to, alkali metal hydroxides, alkaline earth metal hydroxides, other inorganic salts, and amines. Specific examples thereof include sodium hydroxide, potassium hydroxide, calcium hydroxide, calcium acetate, sodium lactate, calcium lactate, calcium oxalate, magnesium hydroxide, magnesium acetate, magnesium lactate, magnesium oxalate, basic aluminum lactate, basic aluminum chloride, ammonia, methylamine, dimethylamine, trimethylamine, triethylamine, monoethanolamine, diethanolamine, and triethanolamine. For neutralization, one basic compound may be used alone, or two or more basic compounds may be used in combination.

By using the pH adjusting agent, a residual acid monomer in the polylactic acid and an acidic decomposition product generated when the polylactic acid is hydrolyzed can be neutralized. Since an acidic substance acts as a catalyst for hydrolysis, the pH adjusting agent is useful for suppressing the hydrolysis of the polylactic acid.

The amount of the auxiliary agent is appropriately selected according to the use of the water-based dispersion and the like, and can be, for example, 0.1 to 1.0% by mass with respect to a mass of the dispersoid.

Examples of an auxiliary agent for improving oil resistance of the biodegradable resin film include a styrene-acrylic copolymer, starch, and wax.

The styrene-based monomer of the styrene-acrylic copolymer is not particularly limited, and examples thereof include styrene, α-methylstyrene, β-methylstyrene, 2,4-dimethylstyrene, α-ethylstyrene, α-butylstyrene, 4-methoxystyrene, and vinyltoluene. The acrylic monomer is not particularly limited, and examples thereof include (meth)acrylic acid esters such as methyl(meth)acrylate, ethyl(meth)acrylate, isopropyl(meth)acrylate, and n-butyl(meth)acrylate; (meth)acrylic acid ester derivatives such as 3-ethoxypropyl acrylate, 3-ethoxybutyl acrylate, and hydroxyethyl methacrylate; acrylic acid aryl esters and acrylic acid aralkyl esters such as phenyl acrylate and benzyl acrylate; and monoacrylic acid esters of polyhydric alcohols such as diethylene glycol, triethylene glycol, and glycerin.

Examples of the starch include modified starches such as corn starch, potato starch, tapioca starch, oxidized starch, phosphoric acid starch, etherified starch, dialdehyded starch, and esterified starch.

As the wax, waxes such as natural wax and synthetic wax can be used. Examples of the natural waxes include plant-based natural waxes such as candelilla wax, rice wax, wood wax, and jojoba solid wax, animal-based natural waxes such as beeswax, lanolin and whale wax, mineral-based natural waxes such as Montan wax, ozokerite and ceresin, and petroleum-based natural waxes such as paraffin wax, microcrystalline wax and petrolatum wax. Examples of the synthetic waxes include synthetic hydrocarbons such as Fischer-Tropsch wax and polyethylene wax, modified waxes such as Montan wax derivatives, paraffin wax derivative and microcrystalline wax derivatives, hydrogenated waxes such as hardened castor oil and hardened castor oil derivatives, 12-hydroxystearic acid, ester waxes synthesized from higher fatty acids and higher alcohols obtained from vegetable fats and oils and animal fats and oils, stearic acid amide, and phthalic anhydride imide.

One or two or more of these can be used in combination within a range in which the heat sealability is not impaired.

### <Water-based dispersion medium>

The water-based dispersion medium is a dispersion medium containing water as a main component, and a dispersant can be dissolved in the water-based dispersion medium.

This dispersant prevents the dispersoid from aggregating in water.

As such a dispersant, one or a mixture of two or more selected from an anionic surfactant, a cationic surfactant, an amphoteric surfactant, a nonionic surfactant, a polymer surfactant, a cationic polymer compound, and an anionic polymer compound can be used.

When the biodegradable resin film obtained from the water-based dispersion is used for food packaging, one or a mixture of polyvinyl alcohol and a block copolymer of ethylene oxide and propylene oxide can be used as a suitable dispersant. This is because food safety thereof is well known. Among them, partially hydrolyzed polyvinyl alcohol is preferably employed, and a degree of saponification is preferably 90% or less. By setting the degree of saponification within this range, biodegradability of polyvinyl alcohol can be enhanced.

The amount of such a dispersant is appropriately selected according to a method of using a water-based dispersion, storage conditions, the use of the biodegradable resin film to be obtained, and the like, and may be, for example, 2.0 to 10.0% by mass with respect to the dispersoid.

When the amount is less than 2.0% by mass, the dispersoid is likely to be aggregated, and when the amount is more than 10.0% by mass the heat sealability is deteriorated, which is not preferable.

In the water-based dispersion medium, the following thickener can be blended in addition to the dispersant in order to improve viscosity thereof.

Examples of the thickener include cellulose derivatives such as methyl cellulose, carboxymethyl cellulose, hydroxyethyl cellulose, hydroxyethyl methyl cellulose, hydroxypropyl methyl cellulose and hydroxypropyl cellulose; starch derivatives such as cationized starch and etherified starch; plant gums such as gum arabic, guar gum and xanthan gum; animal polymers such as casein, chitosan and chitin; and polyalkoxide-based polymers such as polyethylene glycol.

The amount of the thickener is appropriately selected according to the use of the water-based dispersion and the like, and can be, for example, 0.1 to 1.0% by mass with respect to a biodegradable resin aqueous dispersion.

### <Method of dispersing dispersoid in water-based dispersion medium>

As a method of obtaining fine particles of polylactic acid, a phase inversion emulsification method is preferable, and in the case of obtaining fine particles by phase inversion emulsification, a large shear force is required; therefore, use of a colloid mill, a homomixer, a homogenizer, various extruders, a kneader louder, a triaxial planetary disperser, and the like, which are known mechanical emulsification methods, can be mentioned.

The water-based dispersion thus obtained is applied to a surface of a paper substrate as follows, and a biodegradable resin film is formed thereon.

The water-based dispersion was applied to one side of the paper substrate (manufactured by Nippon Paper Industries Co., Ltd.: NPI HIGH-QUALITY) using a bar coater so as to have an application amount of 10 g/m² (dry mass), and dried at 130°C for 60 seconds to prepare a heat seal layer on the paper substrate. A coating thickness (g/m²) was calculated by weighing the paper substrate before and after coating.

A laminate of the paper substrate and the polylactic acid film thus obtained, the films are made to face each other, and heat is applied from the substrate side, so that the films can be melted and heat-sealed.

For the temperature and time required for heat sealing, heating is performed at 90 to 130°C for 1 to 2 seconds.

By forming a film of the aqueous dispersion on a surface of functional particles such as an agrochemical and a fertilizer, and then removing water from the film by drying, the surface of the functional particles can be covered with a biodegradable resin film.

The method of forming the film of the aqueous dispersion on the surface of the functional particles is not particularly limited, and for example, a well-known method such as spray coating can be adopted.

As the method of removing moisture from the film of the aqueous dispersion, any method can be employed under conditions that do not affect the function of the functional particles.

### [Examples]

Hereinafter, the present invention will be specifically described with reference to Examples, but the present invention is not limited thereto. Various properties were measured or evaluated by the following methods.

### (1) Evaluation of blocking resistance

Surfaces of a heat seal layer of a paper substrate (referred to as A-A surfaces) were superimposed and stored under an atmosphere at each storage temperature (40, 45, 50°C) for 24 hours in a state in which a load of 10 kgf/cm² was applied, and then the blocking resistance (A-A surfaces) was evaluated in the following two stages.

Similarly, a surface of the heat seal layer and an uncoated surface being a back surface of the heat seal layer (referred to as A-B surfaces) were superimposed and stored under an atmosphere at each storage temperature (40, 45, 50°C) for 24 hours in a state in which a load of 10 kgf/cm² was applied, and then the blocking resistance (A-B surfaces) was evaluated in the following two stages.
○: High-quality paper can be peeled off without material breakage.
×: Blocking occurs as high-quality paper breaks.

In the evaluation of the blocking resistance, the evaluation on the A-A surfaces indicates the blocking resistance at the time of food packaging used in a bag shape, and the evaluation on the A-B surfaces indicates the effect of the blocking resistance at the time of storage in a roll shape.

### (2) Evaluation of heat sealability

The heat seal layers of the paper substrate were heat-sealed with a heat sealer at different heat sealing temperatures of 90, 100, 110, 120, and 130°C to prepare evaluation samples in which only the heat sealing temperature was changed. A constant condition was used in which the press pressure during heat sealing was 0.2 MPa and the press time was 1 second. Heat sealability evaluation was performed by a tensile tester, and the heat sealability was evaluated based on the following criteria. A tensile speed was 300 mm/min, and a peeling condition was 180° peeling.
○: Adhesion to an extent that the high-quality paper is broken.
×: Since the adhesion is poor, the high-quality paper is not broken.

### (3) Evaluation of water resistance

According to JIS-P8140 (1998), water absorption (g/m²) of the heat seal layer of the paper substrate after 120 seconds was measured using a Cobb water absorptiveness tester (product name: Gurley Cobb size tester, manufactured by Kumagai Riki Kogyo Co., Ltd.). The smaller the value, the better the water resistance.

The polylactic acid aqueous dispersion used in Examples and Comparative Examples is prepared as follows.

### (4) Preparation of polylactic acid aqueous dispersion A

47.2 parts by mass of polylactic acid (PLA LX930 manufactured by Total Corbion PLA b.v., D-type lactic acid: L-type lactic acid = 10: 90) is mixed with an aqueous solution in which 2.8 parts by mass of polyvinyl alcohol (saponification degree (hydrogenation degree): 86%, number average molecular weight: 200,000 g/mol) is dissolved in 50 parts by mass of water, and the former, polylactic acid is used as a solid dispersoid by a general phase inversion emulsification method and dispersed in the latter, the aqueous solution as a water-based dispersion medium to obtain a 50% by mass aqueous dispersion A which is a polylactic acid aqueous dispersion. The mixed blending is shown in Table 1.

### (5) Preparation of polylactic acid aqueous dispersion B blended with plasticizer

After 45.0 parts by mass of polylactic acid (PLA LX930 manufactured by Total Corbion PLA b.v., D-type lactic acid: L-type lactic acid = 10: 90) and 2.3 parts by mass of mixed dibasic acid ester (manufactured by Daihachi Chemical Industry Co., Ltd.: DAIFATTY-101) are melted and stirred, a powder pulverized is mixed with an aqueous solution in which 2.7 parts by mass of polyvinyl alcohol (saponification degree: 86%, number average molecular weight: 200,000 g/mol) is dissolved in 50.0 parts by mass of water, and the former, the pulverized powder is used as a solid dispersoid by a general phase inversion emulsification method and dispersed in the latter, the aqueous solution as a water-based dispersion medium to obtain a 50% by mass aqueous dispersion B which is a polylactic acid aqueous dispersion containing a plasticizer. The mixed blending is shown in Table 1. In Table 1, each name indicates the following components.
Polylactic acid: Luminy LX930 manufactured by Total Corbion PLA b.v.
DAIFATTY-101: mixed dibasic acid ester manufactured by Daihachi Chemical Industry Co., Ltd.

**[Table 1]**

| Material of heat sealant | Polylactic acid aqueous dispersion A | Polylactic acid aqueous dispersion B |
|---|---|---|
| Polylactic acid | 47.2 | 45.0 |
| DAIFATTY-101 | | 2.3 |
| Polyvinyl alcohol | 2.8 | 2.7 |
| Water | 50.0 | 50.0 |
| Total | 100.0 | 100.0 |
| Solid content concentration (% by mass) | 50 | 50 |

Various waxes were blended, and it was confirmed whether the effect could be obtained by waxes other than carnauba wax. The heat sealants used in Examples and Comparative Examples were prepared as follows using the polylactic acid aqueous dispersion A.

### (6) Preparation of heat sealants D-1 to D-6 and performance evaluation of coating layer thereof

Various wax aqueous dispersions were added to the polylactic acid aqueous dispersion A so that the solid content ratio was 6% by mass with respect to the mass of the polylactic acid to prepare heat sealants D-2 to D-6. Each heat sealant was coated on a paper substrate, and then dried to form a heat seal layer. The blocking resistance of the heat seal layers was confirmed. The results of confirming the blending ratio and coating film performance (blocking resistance and heat sealability) thereof are shown in Table 2. In Table 2, each name indicates the following components.

Polylactic acid: Luminy LX930 manufactured by Total Corbion PLA b.v.
DAIFATTY-101: mixed dibasic acid ester manufactured by Daihachi Chemical Industry Co., Ltd.
Selosol 524: 30% by mass carnauba wax emulsion manufactured by Chukyo Yushi Co., Ltd.
Hidorin W-188: 30% by mass paraffin wax emulsion manufactured by Chukyo Yushi Co., Ltd.
Hidorin J-538: 30% by mass montanic acid ester wax emulsion manufactured by Chukyo Yushi Co., Ltd.
Polyron L-618: 30% by mass polyethylene wax emulsion manufactured by Chukyo Yushi Co., Ltd.
Hymicron L-271: 25% by mass amide stearate emulsion manufactured by Chukyo Yushi Co., Ltd.

**F-3**

| Formulation | | Comparative Example 1 | Example 1 | Comparative Example 2 | Comparative Example 3 | Comparative Example 4 | Comparative Example 5 |
|---|---|---|---|---|---|---|---|
| Material of heat sealant | Solid content concentration (% bv mass) | D-1 | D-2 | D-3 | D-4 | D-5 | D-6 |
| Polylactic acid aqueous dispersion A | 50 | 90.0 | 85.2 | 85.2 | 85.2 | 85.2 | 85.2 |
| SELOSOL 524 | 30 | | 8.0 | | | | |
| HIDORIN W-188 | 30 | | | 8.0 | | | |
| HIDORIN J-538 | 30 | | | | 8.0 | | |
| POLYRON L-618 | 30 | | | | | 8.0 | |
| HYMICRON L-271 | 25 | | | | | | 9.7 |
| Water | | 10.0 | 6.8 | 6.8 | 6.8 | 6.8 | 5.1 |
| Total | Solid content concentration (% by mass) | 100.0 | 100.0 | 100.0 | 100.0 | 100.0 | 100.0 |
| Solid content composition ratio (% by mass) | Polylactic acid | 42.4 | 40.2 | 40.2 | 40.2 | 40.2 | 40.2 |
| | Polyvinyl alcohol | 2.6 | 2.4 | 2.4 | 2.4 | 2.4 | 2.4 |
| | Carnauba wax | | 2.4 | | | | |
| | Paraffin wax | | | 2.4 | | | |
| | Montanic acid ester wax | | | | 2.4 | | |
| | Polyethylene wax | | | | | 2.4 | |
| | Stearamide | | | | | | 2.4 |
| Solid content concentration (% bv mass) of heat sealant | | 45 | 45 | 45 | 45 | 45 | 45 |
| Coating thickness (g/m²) | | 10.1 | 10.2 | 10.1 | 10.1 | 9.9 | 10.1 |
| Heat sealability | 90°C | ○ | × | × | × | × | × |
| | 100°C | ○ | ○ | × | × | × | × |
| | 110°C | ○ | ○ | × | × | × | ○ |
| | 120°C | ○ | ○ | × | × | × | ○ |
| | 130°C | ○ | ○ | × | × | × | ○ |
| Blocking resistance (40°C) | A-B surface | ○ | ○ | ○ | ○ | ○ | ○ |
| | A-A surface | ○ | ○ | ○ | ○ | ○ | ○ |
| Blocking resistance (45°C) | A-B surface | × | ○ | ○ | ○ | ○ | ○ |
| | A-A surface | × | ○ | ○ | ○ | ○ | × |
| Blocking resistance (50°C) | A-B surface | × | ○ | ○ | ○ | ○ | ○ |
| | A-A surface | × | ○ | ○ | ○ | ○ | × |

From the results in Table 2, the following is understood.

In the case of only polylactic acid (Comparative Example 1, heat sealant D-1), sticking occurs when the storage temperature is 45°C or higher. This sticking was so much that the paper substrate was broken. On the other hand, it can be seen that the heat seal layer obtained from the heat sealant D-2 (Example 1) in which carnauba wax is blended exhibits excellent blocking resistance even when stored at 50°C, and also has the heat sealability.

In Comparative Examples 2 to 5 (heat sealants D-3 to D-6), the effect of other waxes was similarly confirmed; however, although the effect on the blocking resistance was exhibited, it was found that the blocking resistance and the heat sealability were not compatible because the heat sealability was not exhibited or a high heat sealing temperature was required.

Next, the effect of the amount of carnauba wax was confirmed. The heat sealants used in Examples and Comparative Examples were prepared as follows using the polylactic acid aqueous dispersion A.

### (6) Preparation of heat sealants E-1 to E-9 and performance evaluation of coating layer thereof

Selosol 524 manufactured by Chukyo Yushi Co., Ltd. was added as carnauba wax to the polylactic acid aqueous dispersion A at each blending ratio to prepare heat sealants E-1 to E-9. Each heat sealant was coated on a paper substrate, and then dried to form a heat seal layer. The blocking resistance of the heat seal layers was confirmed. The results of confirming the mixed blending and coating film performance (blocking resistance and heat sealability) thereof are shown in Table 3. In Table 3, each name indicates the following components.
Polylactic acid: Luminy LX930 manufactured by Total Corbion PLA b.v.
Selosol 524: 30 % by mass carnauba wax emulsion manufactured by Chukyo Yushi Co., Ltd.

**[Table 3]**

| Formulation | | Comparative Example 1 | Example 2 | Example 3 | Example 4 | Example 5 | Example 6 | Example 7 | Example 8 | Example 9 | Comparative Example 6 |
|---|---|---|---|---|---|---|---|---|---|---|---|
| Material of heat sealant | Solid content concentration (% by mass) | D-1 | E-1 | E-2 | E-3 | E-4 | E-5 | E-6 | E-7 | E-8 | E-9 |
| Polylactic acid aqueous dispersion A | 50 | 90.0 | 89.2 | 88.3 | 86.7 | 85.2 | 83.7 | 82.3 | 80.9 | 79.5 | 78.8 |
| SELOSOL 524 | 30 | | 1.4 | 2.8 | 5.5 | 8.0 | 10.5 | 12.9 | 15.3 | 17.5 | 18.6 |
| Water | | 10.0 | 9.4 | 8.9 | 7.8 | 6.8 | 5.8 | 4.8 | 3.8 | 3.0 | 2.6 |
| Total (% by mass) | | 100.0 | 100.0 | 100.0 | 100.0 | 100.0 | 100.0 | 100.0 | 100.0 | 100.0 | 100.0 |
| Solid content composition ratio (% by mass) | Polylactic acid | 42.4 | 42.1 | 41.7 | 40.9 | 40.2 | 39.5 | 38.8 | 38.1 | 37.5 | 37.2 |
| | Polyvinyl alcohol | 2.6 | 2.5 | 2.5 | 2.5 | 2.4 | 2.4 | 2.3 | 2.3 | 2.3 | 2.2 |
| | Carnauba wax | 0.0 | 0.4 | 0.8 | 1.6 | 2.4 | 3.2 | 3.9 | 4.6 | 5.3 | 5.6 |
| Solid content concentration (% by mass) of heat sealant | | 45 | 45 | 45 | 45 | 45 | 45 | 45 | 45 | 45 | 45 |
| Amount of carnauba (% by mass) | | 0 | 1 | 2 | 4 | 6 | 8 | 10 | 12 | 14 | 15 |
| Coating thickness (g/m²) | | 10.1 | 9.9 | 10.1 | 10.2 | 9.9 | 10.2 | 10.2 | 9.9 | 9.7 | 9.8 |
| Heat sealability | 90°C | ○ | ○ | ○ | × | × | × | × | × | × | × |
| | 100°C | ○ | ○ | ○ | ○ | ○ | × | × | × | × | × |
| | 110°C | ○ | ○ | ○ | ○ | ○ | ○ | × | × | × | × |
| | 120°C | ○ | ○ | ○ | ○ | ○ | ○ | ○ | ○ | ○ | × |
| | 130°C | ○ | ○ | ○ | ○ | ○ | ○ | ○ | ○ | ○ | × |
| Blocking resistance (40°C) | A-B surface | ○ | ○ | ○ | ○ | ○ | ○ | ○ | ○ | ○ | ○ |
| | A-A surface | ○ | ○ | ○ | ○ | ○ | ○ | ○ | ○ | ○ | ○ |
| Blocking resistance (45°C) | A-B surface | × | ○ | ○ | ○ | ○ | ○ | ○ | ○ | ○ | ○ |
| | A-A surface | × | ○ | ○ | ○ | ○ | ○ | ○ | ○ | ○ | ○ |
| Blocking resistance (50°C) | A-B surface | × | × | × | × | ○ | ○ | ○ | ○ | ○ | ○ |
| | A-A surface | × | × | × | × | ○ | ○ | ○ | ○ | ○ | ○ |
| Cobb water absorptiveness (g/m²) | | 28.1 | 7.8 | 2.8 | 2.5 | 2.3 | 2.4 | 2.7 | 2.8 | 3.0 | 2.9 |

From the results in Table 3, the following is understood.

Examples 2 to 9 and Comparative Examples 1 and 6 show that the amount of the carnauba wax relative to the mass of the polylactic acid is preferably 1% by mass or more and 14% by mass or less. It is found that when the amount of the carnauba wax relative to the mass of the polylactic acid is less than 1% by mass, the blocking resistance is poor, and when the amount is more than 14% by mass, although the effect of improving the blocking resistance is sufficiently obtained, the heat sealability is not exhibited under the temperature condition of 130°C, and processability is poor.

Examples 2 to 9 and Comparative Example 1 show that when the amount of the carnauba wax relative to the mass of the polylactic acid is 2 to 14% by mass, the Cobb water absorptiveness is also 3 g/m² or less, and as compared with Comparative Example 1 in which no carnauba wax is blended (Cobb water absorptiveness is 28.1 g/m²), excellent water resistance can also be imparted to the heat seal layer while maintaining the heat sealability.

Next, a plasticizer can also be used to impart flexibility to the heat seal layer. However, although a glass transition point of polylactic acid alone is 54°C, if the polylactic acid and a plasticizer are mixed, it is expected that for example when 5% by mass of the plasticizer (DAYFATTY-101 manufactured by Daihachi Chemical Industry Co., Ltd.) is blended relative to the mass of the polylactic acid, the glass transition point is lowered to 44°C, when 10% by mass of the plasticizer is blended, the glass transition point is lowered to 34°C, and the storage temperature at which blocking occurs is also lowered. Thus, it was confirmed whether the blocking resistance and the heat sealability could be compatible by blending carnauba wax even when the plasticizer was blended in the polylactic acid. The heat sealants used in Examples and Comparative Examples were prepared as follows using the polylactic acid aqueous dispersion B. The glass transition point of a dry solid content of the polylactic acid aqueous dispersion B was 44.3°C (the glass transition point was determined by differential scanning calorimetry). On the other hand, the glass transition point of the dry solid content of the polylactic acid aqueous dispersion A was 54.5°C.

### (7) Preparation of heat sealants F-1 to F-10 and performance evaluation of coating layer thereof

Selosol 524 manufactured by Chukyo Yushi Co., Ltd. was added as carnauba wax to the polylactic acid aqueous dispersion B at each blending ratio to prepare heat sealants F-2 to F-10. Each heat sealant was coated on a paper substrate, and then dried to form a heat seal layer. The blocking resistance of the heat seal layers was confirmed. The results of confirming the mixed blending and coating film performance (blocking resistance and heat sealability) thereof are shown in Table 4. In Table 4, each name indicates the following components.
Polylactic acid: Luminy LX930 manufactured by Total Corbion PLA b.v.
DAIFATTY-101: mixed dibasic acid ester manufactured by Daihachi Chemical Industry Co., Ltd.
Selosol 524: 30 % by mass carnauba wax emulsion manufactured by Chukyo Yushi Co., Ltd.

**[Table 4]**

| Formulation | | Comparative Example 1 | Comparative Example 7 | Example 10 | Example 11 | Example 12 | Example 13 | Example 14 | Example 15 | Example 16 | Comparative Example 17 | Comparative Example 8 |
|---|---|---|---|---|---|---|---|---|---|---|---|---|
| Material of heat sealant | Solid content concentration (% by mass) | D-1 | F-1 | F-2 | F-3 | F-9 | F-5 | F-6 | F-7 | F-8 | F-9 | F-10 |
| Polylactic acid aqueous dispersion A | 50 | 90.0 | | | | | | | | | | |
| Polylactic acid aqueous dispersion B | 50 | | 90.0 | 88.8 | 87.9 | 86.3 | 84.8 | 83.3 | 81.9 | 80.5 | 79.1 | 78.5 |
| SELOSOL 524 | 30 | | | 1.9 | 2.8 | 5.5 | 8.1 | 10.6 | 13.0 | 15.3 | 17.5 | 18.6 |
| Water | | 10.0 | 10.0 | 9.8 | 9.3 | 8.2 | 7.1 | 6.1 | 5.1 | 4.2 | 3.3 | 2.9 |
| Total | | 100.0 | 100.0 | 100.0 | 100.0 | 100.0 | 100.0 | 100.0 | 100.0 | 100.0 | 99.9 | 100.0 |
| Solid content composition ratio (% by mass) | Polylactic acid | 42.4 | 40.5 | 40.2 | 39.8 | 39.1 | 38.4 | 37.7 | 37.0 | 36.4 | 35.8 | 35.5 |
| | DAIFATTY-101 | | 2.0 | 2.0 | 2.0 | 2.0 | 1.9 | 1.9 | 1.9 | 1.8 | 1.8 | 1.8 |
| | Polyvinyl alcohol | 2.6 | 2.4 | 2.4 | 2.4 | 2.3 | 2.3 | 2.3 | 2.2 | 2.2 | 2.1 | 2.1 |
| | Carnauba wax | 0.0 | 0.0 | 0.4 | 0.8 | 1.6 | 2.4 | 3.2 | 3.9 | 4.6 | 5.3 | 5.6 |
| Solid content concentration (% by mass) of heat sealant | | 45 | 45 | 45 | 45 | 45 | 45 | 45 | 45 | 45 | 45 | 45 |
| Amount of carnauba (% by mass) * | | 0 | 0 | 1 | 2 | 4 | 6 | 8 | 10 | 12 | 14 | 15 |
| Coating thickness (g/m²) | | 10.1 | 9.9 | 9.8 | 10.0 | 9.9 | 9.9 | 10.0 | 10.1 | 9.9 | 10.0 | 10.2 |
| Heat sealability | 90°C | ○ | ○ | ○ | ○ | × | × | × | × | × | × | × |
| | 100°C | ○ | ○ | ○ | ○ | ○ | × | × | × | × | × | × |
| | 110°C | ○ | ○ | ○ | ○ | ○ | ○ | ○ | ○ | × | × | × |
| | 120°C | ○ | ○ | ○ | ○ | ○ | ○ | ○ | ○ | ○ | ○ | × |
| | 130°C | ○ | ○ | ○ | ○ | ○ | ○ | ○ | ○ | ○ | ○ | × |
| Blocking resistance (40°C) | A-B surface | ○ | × | ○ | ○ | ○ | ○ | ○ | ○ | ○ | ○ | ○ |
| | A-A surface | ○ | × | × | ○ | ○ | ○ | ○ | ○ | ○ | ○ | ○ |
| Blocking resistance (45°C) | A-B surface | × | × | × | × | ○ | ○ | ○ | ○ | ○ | ○ | ○ |
| | A-A surface | × | × | × | × | ○ | ○ | ○ | ○ | ○ | ○ | ○ |
| Blocking resistance (50°C) | A-B surface | × | × | × | × | × | ○ | ○ | ○ | ○ | ○ | ○ |
| | A-A surface | × | × | × | × | × | ○ | ○ | ○ | ○ | ○ | ○ |
| Cobb water absorptiveness (a/m²) | | 28.1 | 5.1 | 4 . 7 | 2.9 | 2.2 | 2.5 | 2.6 | 2.9 | 2.8 | 3.0 | 2.9 |

| | | | | | | | | | | | | |
|---|---|---|---|---|---|---|---|---|---|---|---|---|
| *Amount (% by mass) of carnauba wax relative to a total mass of polylactic acid and platicizer | | | | | | | | | | | | |

From the results in Table 4, the following is understood.

Comparative Examples 1 and 7 show that the temperature at which blocking occurs by adding the plasticizer is lowered from 45 °C to 40°C.

Examples 10 to 17 and Comparative Examples 7 and 8 show that the amount of the carnauba wax relative to the total mass of the polylactic acid and the plasticizer is preferably 1% by mass or more and 14% by mass or less. When the amount of the carnauba wax relative to the total mass of the polylactic acid and the plasticizer is less than 1% by mass, the blocking resistance is poor. It is found that when the amount of the carnauba wax relative to the total mass of the polylactic acid and the plasticizer is more than 14% by mass, although the effect of improving the blocking resistance is sufficiently obtained, the heat sealability is not exhibited under the temperature condition of 130°C, and the processability is poor.

Examples 10 to 17 and Comparative Example 7 show that when the amount of the carnauba wax relative to the total mass of the polylactic acid and the plasticizer is 2 to 14% by mass, the Cobb water absorptiveness is also 3 g/m² or less, and as compared with Comparative Example 6 in which no carnauba wax is blended (Cobb water absorptiveness is 5.1 g/m²), excellent water resistance can also be imparted to the heat seal layer while maintaining the heat sealability.

The present invention is not limited to the description of the above embodiment of the invention. Various modifications within the scope easily devised by those skilled in the art without departing from the description of the scope of claims are also included in the present invention.

## Claims

1. An aqueous dispersion comprising a biodegradable resin and a wax as dispersoids that are dispersed in a water-based dispersion medium,
wherein the biodegradable resin comprises polylactic acid,
the wax comprises carnauba wax, and
1 to 14% by mass of the carnauba wax is blended relative to a mass of the polylactic acid.

2. The aqueous dispersion according to claim 1, wherein an amount of the carnauba wax is 2 to 14% by mass.

3. The aqueous dispersion according to claim 1, wherein an amount of the carnauba wax is 6 to 14% by mass.

4. The aqueous dispersion according to any one of claims 1 to 3, further comprising a partially hydrolyzed polyvinyl alcohol as a dispersant in the aqueous dispersion medium in an amount of 2.0 to 10.0% by mass relative to a mass of the dispersoid.

5. An aqueous dispersion comprising a biodegradable resin, a plasticizer, and a wax as dispersoids which are dispersed in a water-based dispersion medium,
wherein the biodegradable resin comprises polylactic acid,
the plasticizer is contained in an amount of 1 to 15% by mass relative to a mass of the polylactic acid,
the wax comprises carnauba wax, and
1 to 14% by mass of the carnauba wax is blended relative to a total mass of the polylactic acid and the plasticizer.

6. The aqueous dispersion according to claim 5, wherein an amount of the carnauba wax is 2 to 14% by mass.

7. The aqueous dispersion according to claim 5, wherein an amount of the carnauba wax is 6 to 14% by mass.

8. The aqueous dispersion according to any one of claims 5 to 7, further comprising a partially hydrolyzed polyvinyl alcohol as a dispersant in the aqueous dispersion medium in an amount of 2.0 to 10.0% by mass relative to a mass of the dispersoid.

9. A coating liquid comprising the aqueous dispersion according to any one of claims 1 to 8.

10. A process for producing a polylactic acid film comprising the steps of:
providing the coating liquid according to claim 9;
applying the coating liquid to a substrate; and
drying the coating liquid.

11. A sheet material comprising:
a substrate comprises a cellulose material; and
a heat seal layer comprises a biodegradable resin,
wherein the heat seal layer comprises polylactic acid and carnauba wax, and a blending ratio of the carnauba wax to the polylactic acid is 1 to 14% by mass.

12. The sheet material according to claim 11, wherein the blending ratio of the carnauba wax to the polylactic acid is 2 to 14% by mass.

13. The sheet material according to claim 12, wherein the heat seal layer has a Cobb water absorptiveness of 3.0 g/m² or less.

14. The sheet material according to claim 11, wherein the blending ratio of the carnauba wax to the polylactic acid is 6 to 14% by mass.

15. The sheet material according to claim 14, wherein an anti-blocking temperature is 50°C.

16. A sheet material comprising:
a substrate comprises a cellulose material; and
a heat seal layer comprises a biodegradable resin,
wherein the heat seal layer comprises polylactic acid, a plasticizer, and carnauba wax, and a blending ratio of the carnauba wax to the polylactic acid and the plasticizer is 1 to 14% by mass.

17. The sheet material according to claim 16, wherein the blending ratio of the carnauba wax to the polylactic acid and the plasticizer is 2 to 14% by mass.

18. The sheet material according to claim 17, wherein the heat seal layer has a Cobb water absorptiveness of 3.0 g/m² or less.

19. The sheet material according to claim 16, wherein the blending ratio of the carnauba wax to the polylactic acid and the plasticizer is 6 to 14% by mass.

20. The sheet material according to claim 19, wherein an anti-blocking temperature is 50°C.

21. A process for producing sustained release functional particles, comprising the steps of:
providing the aqueous dispersion according to any one of claims 1 to 8;
forming a film layer of the aqueous dispersion on a surface of a fertilizer, an agrochemical, or other functional particle; and
removing water from the aqueous dispersion.
